# EUROPEAN PATENT SPECIFICATION

(11) **EP 0 584 534 B1**
(45) Date of publication and mention of the grant of the patent: **08.09.1999**
(21) Application number: 93111722.0
(22) Date of filing: 22.07.1993
(51) Int. Cl.: H04L 27/34

(54) **Method and apparatus for reducing the peak power of data sequences**
Verfahren und Einrichtung zur Verminderung der Spitzenleistung von Datenfolgen
Procédé et dispositif pour la réduction de la puissance de crête de séquences de données

(30) Priority: 27.07.1992 IT MI921819
(43) Date of publication of application: 02.03.1994
(73) Proprietor: ALCATEL, 75008 Paris (FR)
(72) Inventor: Sandri, Andrea, I-56124 Pisa (IT); Spalvieri, Arnaldo, I-60019 Senigallia (AN) (IT)
(74) Representative: Knecht, Ulrich Karl, Dipl.-Ing.

(56) References cited:
- EP-A- 0 383 632
- WO-A-92/17971
- IEEE JOURNAL ON SELECTED AREAS IN COMMUNICATION vol. 7, no. 6 , August 1989 , NEW YORK US pages 941 - 958 FORNEY 'Multidimensional constellations - part II: Voronoi constellations'
- TRANSACTIONS OF THE IEICE vol. E71, no. 6 , June 1988 , TOKYO, JP pages 591 - 598 NAKAMURA ET AL. 'A new 90Mbps 68 APSK modem with honeycomb constellation for digital radio relay systems'
- IEEE International Conference on Communications 1991, 23-27/6/1991, Denver, US; IEEE, New York, US, 1991; pages 1075 - 1079, Soleymani & Kang: "Trellis coding with partially overlapped signal sets"
- IEEE International Conference on Communications 1992; 14-18/6/1992, Chicago, US; IEEE,New York, US, 1992; pages 431 - 1435, Khandani & Kabal: "Using a prefix code for addressing the Voronoi constellations based on lattices Dn and D*n"

## Description

### Background of the invention

The present invention relates to a method and system of transmitting and receiving digital signals over a transmission link, comprising the steps of: in transmission, encoding and modulating (II) the input digital signal obtaining an output digital signal in the form of digital sequencies, filtering (IV) it for providing a modulated signal to be transmitted over a non-linear channel (V, VI) subject to non-linearities and disturbancies; in reception, filtering (VII) the received signal from the non-linear channel, and decoding and demodulating (IX) the filtered received signal to obtain a reconstructed digital signal.

### State of the art

The present digital transmission systems try to obtain high spectral efficiencies through gradually more complex modulation formats. The higher spectral efficiency is counterbalanced by the need of increasing the transmitted power to obtain a prefixed BER (Bit Error Rate: number of wrong bits to total number of bits ratio) value at the receiver. The power delived by the trasmitter generally is limited by the final power apmlifier, which has a greatly nonlinear behaviour.

Therefore a serious problem arises with regard to the best exploitation of the nonlinear part of the input-output characteristic of the "channel", including in the latter the final amplifier of the transmitter.

At present the problem is faced in one of the following ways (see e.g. the papers of G. Karam, H. Sari, "Analysis of predistortion, equalization and ISI cancellation techniques in digital radio systems with nonlinear transmit amplifier", IEEE Transaction on Communications, vol. 37, n. 12, Dec. 1989):
1) data predistortion: attempts are made to modify the constellation used for driving the nonlinear amplifier through a signal such as to obtain the desired constellation at its output;
2) analog signal predistortion: a nonlinear circuit having a characteristic opposite to the one of the above-defined "channel", is inserted in the path of the analog signal;
3) channel equalization and nonlinear cancellation of the ISI: the receiving equalizer tries to cancel the interferences connected with nonlinearity from the present signal sample (through a suitable nonlinear combination of pre- and post-cursors);
4) use of "circular" constellations so as to reduce the ratio between the peak power and the average power of the unfiltered signal.

All the above solutions, under special circumstances, can provide unsatisfactory performances. In particular the first three are not very efficient in the presence of "hard limiter" characteristic of the transmission final amplifier; the last one gives anyway rise to slight gains which can be not sufficient in the case of a reception filter with very narrow bandwidth.

From for example EP-A-0383632; or IEEE Journal on Sel. Ares in Comm., vol. 7, no.6, August 1989, pages 941-958, Forney: "Multidimensional Constellations - part II: Voronoi Constellations"; or Trans. IEICE vol. E71, no. 6, June 1988, Tokyo, pages 591-598, Nakamura et al.: "A New 90Mbps 68 APSK Modem With Honeycomb Constellation For Digital Radio Relay Systems", methods are known for minimizing the average power of the transmitted signal, possibly using circular two-dimensional constellations. These methods however do not address one of the real problems of the transmission channel, that is the non-linearity of the transmission final amplifier.

### Summary of the invention

It is an object of the invention to provide a base-band system which - other conditions being unchanged - reduces the peak power of the filtered signal, i.e. at the input of the nonlinear channel defined above.

It has been found, inter alia, that such a reduction is to the advantage of radio relay system links, e.g. allowing the use of smaller antennas or transmission over longer path sections.

The outstanding features of the invention are set forth in the claims while the various aspects and advantages of the invention will become more apparent from the following not limiting description.

The basic idea of the invention is based upon the possibility (other conditions such as minimum distance between transmitted points, average transmitted power, etc.. being unchanged) of avoiding transmission of sequences having an associated high peak power of the filtered signal, , replacing them with more suitable ones (i.e. with a lower peak power of the filtered signal).

The possibility of carrying out this replacement is given by the increasing of the dimension of the alphabet of the transmitted points. In reception the unwanted sequences, suppressed in transmission, are reconstructed in their original form.

By reducing in this way the peak power of the filtered signal it is possible to exploit in a much more efficient manner the nonlinear characteristic of the above-defined "channel".

Such reduction allows to minimize the effects of the transmission channel nonlinearity, including possible nonlinearities of the transmission amplifier.

### Detailed description.

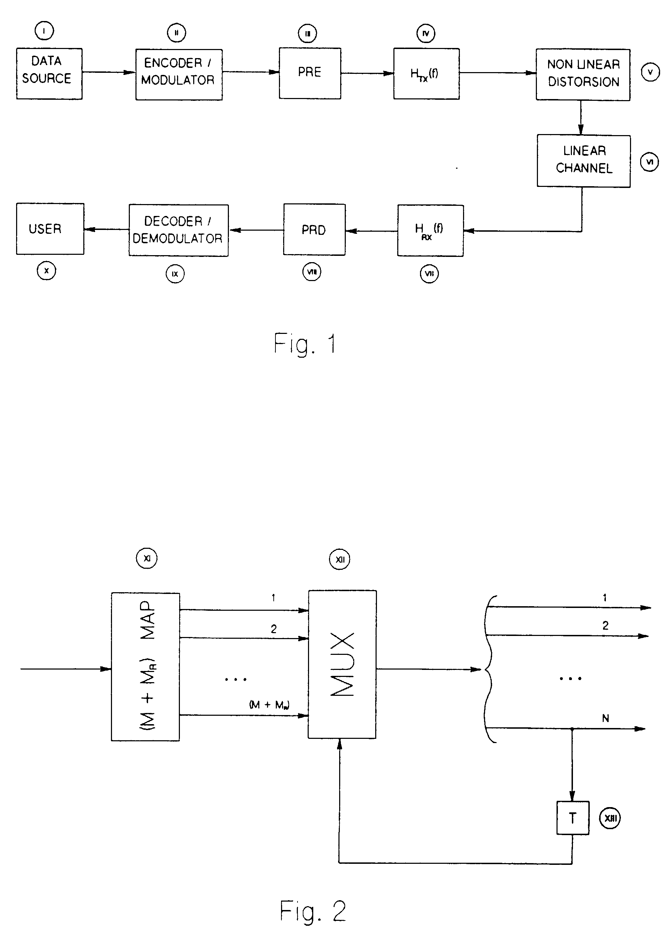

Fig. 1 illustrates the schematic block diagram of a generic digital transmission system (blocks I, II, IV, V, VI, VII, IX, X) in which blocks III and VIII, subject of this invention, are inserted. In particular, fig. 1 shows:- a DATA SOURCE (ref. I) which outputs the digital sequence to be transmitted;
- an ENCODER/MODULATOR block (ref. II) which receives at the input the digital sequence to be transmitted and carries out the standard encoding operations designed for BER reduction (block, convolutional, Trellis Code Modulation, etc.., type encoding) and modulation operations, providing at its output one of the points of the constellation to be transmitted;
- a block PRE (ref. III), subject of the invention along with block VIII, which eliminates from the transmission the unwanted sequences in terms of peak power of the filtered signal, i.e. of the signal at the output of block IV described below;
- a transmission filter HTx (f) (ref. IV) which provides at its output the analog signal to be transmitted;
- a NONLINEAR DISTORTION block (ref. V) representing an unwanted nonlinear distortion on the signal path. It can be due to the nonlinear characteristic of the final amplifier of the transmitter (as it happens e.g. in microwave links) or, more generally, to a nonlinear behaviour of the transmission channel;
- a transmission channel (ref. VI) identified as "LINEAR CHANNEL", which outputs a signal consisting of the signal at its input added to and/or combined with disturbances of various kind;
- a reception filter HRx (f) (ref. VII) which receives the signal from the transmission channel and carries out a suitable filtering;
- a block PRD (ref. VIII), subject of the invention along with block III, which reconstitutes the signal in its original form containing the unwanted sequences suppressed in transmission by block III;
- a DECODER/DEMODULATOR block (ref. IX) which receives the outgoing signal from block VIII demodulates it and carries out the above-mentioned standard decoding operations, providing the user with the numeric sequence subject of the transmission;
- the USER (ref. X) which receives the numeric sequence.

In an advantageous and therefore preferred embodiment, blocks PRE (III) and PRD (VIII) in accordance with the invention are realized in the form of digital encoders. As an example, fig. 2 shows a block diagram illustrating how it is possible to realize the block PRE in case of a radio relay system transmission using a quadrature amplitude modulation (QAM). Let M be the points of the two-dimensional constellation to be transmitted in the conventional case (hereinafter "standard2 constellation) and MR be the redundance points necessary for the encoding (carried out in PRE) subject of the invention; the resulting constellation is composed of (M+MR) points (hereinafter "expanded" constellation).
Typically: 1< (M+MR)/M < 1.2.

In fig. 2 there is shown the prefered embodiment of PRE; it includes:
- a delay element T (ref. XIII) which receives the last two-dimensional element of the block of N two-dimensional symbols outgoing from block XII and outputs it with a delay equal to one channel symbol interval. Such output will be indicated as "state" of the machine in the following;
- a mapping element identified as "(M+MR) MAP" (ref. XI) which receives at its input a block of N symbols of the "standard" costellation and provides (M+MR) blocks of N two-dimensional symbols of the "expanded" constellation. Each output block is relative to a particular "state" of the system and represents the best sequence to be transmitted (in the presence of that particular "state" of the machine) in terms of peak power of the filtered signal.
- a multiplexer "MUX" (ref. XII) having (M+MR) inputs and one output which, on the basis of the "state" at the output of block XIII selects (among the M+MR inputs) the suitable block of N symbols to be provided at the output.

According to one particular aspect - even if not limiting - of the invention, the calculation of the "best sequence in terms of peak power of the filtered signal" is arranged as follows.

Let hTX(t) be the pulse response of the transmission filter IV of fig. 1, T the symbol time, d^{(k)} (k=1,2 ..., (M+MR)) the "state" of the system, Ci = (ci, ci+1, ..., cN-1) the generic block of N two-dimensional symbols.

The "weight" w of block Ci = (ci, ci+1, ..., cN-1) given the state d(k), can be defined as the quantity: 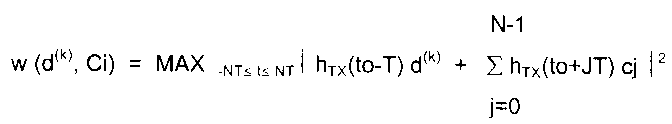 then assuming that the best sequences Ci (in terms of peak power of the filtered signal) are those having a lower "weight" w(d^{(k)}, Ci).

The block PRD can be realized through a circuit quite similar to the one shown in fig. 2 for block PRE; its description in terms of block diagram (being within the reach of those skilled in the art, in the light of what has been set forth hereinbefore) will be omitted for conciseness' sake.

Reference has been made to specific embodiments represented in figs. 1 and 2 for simplicity and illustrative clearness reasons; therefore it is evident that these are susceptible to those variations, modifications, replacements and the like which, being within the reach of those skilled in the art, naturally fall within the sphere of the invention.

The following possible variants are here mentioned by way of an example:
- in equation (1) a "state" consisting of several two-dimensional symbols could be envisaged;
- blocks XI and XII of fig. 2 coluld be replaced by a combinatory algebra, thus transforming the structure of block PRE into a convolutional one.
- N could be taken great enough to be able to eliminate in Fig. 2 the reaction through block XIII thus transforming the structure of block PRE into a "block" structure.

## Claims

1. Method of transmitting and receiving digital signals over a transmission link, comprising the steps of:
- in transmission, encoding and modulating (II) the input digital signal obtaining an output digital signal in the form of digital sequencies, filtering (IV) it for providing a modulated signal to be transmitted over a non-linear channel (V, VI) subject to non-linearities and disturbancies;
- in reception, filtering (VII) the received signal from the non-linear channel, and decoding and demodulating (IX) the filtered received signal to obtain a reconstructed digital signal;
characterized in that it further comprises the steps of:
- in transmission, replacing (III) those of the said digital sequencies having an associated peak power of the signal to be transmitted higher than a given value, with new digital sequencies having an associated peak power of the signal to be transmitted lower than the given value;
- in reception, restoring (VIII) the said digital sequencies having an associated peak power of the signal to be transmitted higher than the given value before demodulating, so as to minimize the effects of said non-linearities and disturbancies on said reconstructed digital signal.

2. Method of transmitting and receiving digital signals as in claim 1, characterized in that
the transmission link is a digital radio relay system link and the modulation is a QAM quadrature amplitude modulation having a two-dimensional constellation of points (M) being said digital sequencies; and in that said replacing is carried out on said two-dimensional constellation of points.

3. Method of transmitting and receiving digital signals as in claim 2, characterized in that said replacing comprises the following steps:
- enlarging the number of constellation points (M) by adding a number of redundance constellation points (MR), so obtaining an expanded constellation composed of (M+MR) points;
- calculating a weight function (w) of a pulse response h_{TX}(t) of said transmission filtering (IV) extended to said expanded constellation of (M+MR) points;
- said digital sequencies having an associated peak power of the signal to be transmitted higher than a given value being the expanded constellation points having the weight function (w) higher than a given value.

4. Method of transmitting and receiving digital signals as in claim 3, characterized in that said weight function (w) is: 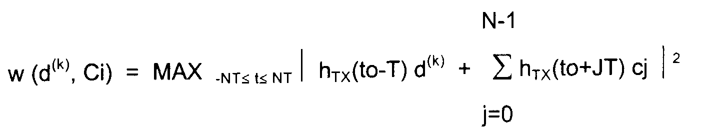 where T is a symbol time, d^{(k)} [k=1,2 ..., (M+MR)] a "state" of the system, Ci = (ci, ci+1, ..., cN-1) a generic block of N two-dimensional constellation points.

5. System for transmitting and receiving digital signals over a transmission link, comprising:
- in transmission, encoding and modulating means (II) of the input digital signal obtaining an output digital signal in the form of digital sequencies, first filtering means (IV) for providing a modulated signal to be transmitted over a non-linear channel (V, VI) subject to non-linearities and disturbancies;
- in reception, second filtering means (VII) of the received signal from the non-linear channel, and decoding and demodulating means (IX) of the filtered received signal obtaining a reconstructed digital signal;
characterized in that it further comprises:
- in transmission, replacing means (III) of those of the said digital sequencies having an associated peak power of the signal to be transmitted higher than a given value, with new digital sequencies having an associated peak power of the signal to be transmitted lower than the given value;
- in reception, restoring means (VIII) of the said digital sequencies having an associated peak power of the signal to be transmitted higher than the given value, said restoring means being inserted before said demodulating means, so as to minimize the effects of said non-linearities and disturbancies on said reconstructed digital signal.

6. System for transmitting and receiving digital signals as in claim 5, characterized in that the transmission link is a digital radio relay system link and the modulation is a QAM quadrature amplitude modulation having a two-dimensional constellation of points (M) being said digital sequencies; and in that said replacing is carried out on said two-dimensional constellation of points.

7. System for transmitting and receiving digital signals as in claim 6, characterized in that said replacing means (III) comprise:
- delaying means (T) which receive the last two-dimensional element of the block of N outgoing two-dimensional symbols from a multiplexer (MUX) and outputs it with a delay equal to one channel symbol interval T;
- mapping means ((M+MR)MAP) which receive a block of N symbols of said constellation of points and provide (M+MR) output blocks of N two-dimensional symbols of an "expanded" constellation, each output block representing the best sequence to be transmitted in terms of peak power of the filtered signal at the output of said first filtering means (VII);
- multiplexing means (MUX) having (M+MR) inputs and one output which, on the basis of the "state" at the output of said delaying means (T) select among the M+MR blocks present at its input the block of N symbols to be provided at the output.

8. System for transmitting and receiving digital signals as in claim 7, characterized in that said mapping means comprise means for calculating each output block representing the best sequence to be transmitted in terms of peak power, according to the following weight function (w): 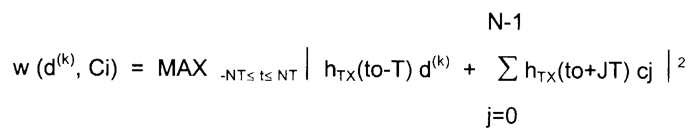 where T is a symbol time, d^{(k)} [k=1,2 ..., (M+MR)] a "state" of the system, Ci = (ci, ci+1, ..., cN-1) a generic block of N two-dimensional constellation points.

## Patentansprüche

1. Verfahren zum Senden und Empfangen von Digitalsignalen über eine Übertragungsstrecke, das die Schritte umfaßt:
- beim Senden Codieren und Modulieren (II) des Eingangsdigitalsignals, wobei ein Ausgangdigitalsignal in der Form von digitalen Sequenzen erhalten wird, Filtern (IV) desselben zum Bereitstellen eines modulierten Signals, das über einen Nichtlinearitäten und Störungen unterworfenen nichtlinearen Kanal (V, VI) übertragen werden soll;
- beim Empfangen Filtern (VII) des von dem nichtlinearen Kanal empfangenen Signals und Decodieren und Demodulieren (IX) des gefilterten empfangenen Signals, um ein rekonstruiertes Digitalsignal zu erhalten;
**dadurch gekennzeichnet**, daß das Verfahren ferner die Schritte umfaßt:
- beim Senden Ersetzen (III) jener digitalen Sequenzen mit einer zugehörigen Spitzenleistung des zu übertragenden Signals, die höher als ein gegebener Wert ist, durch neue digitale Sequenzen mit einer zugehörigen Spitzenleistung des zu übertragenden Signals, die kleiner als der gegebene Wert ist;
- beim Empfangen Wiederherstellen (VIII) der digitalen Sequenzen mit einer zugehörigen Spitzenleistung des zu übertragenden Signals, die größer als der gegebene Wert vor dem Demodulieren ist, um so die Wirkungen der Nichtlinearitäten und Störungen auf das rekonstruierte Digitalsignal zu minimieren.

2. Verfahren zum Senden und Empfangen von Digitalsignalen nach Anspruch 1, dadurch gekennzeichnet, daß die Übertragungsstrecke eine Richtfunksystemstrecke ist und die Modulation eine QAM-Quadraturamplitudenmodulation mit einer zweidimensionalen Konstellation von Punkten (M), welche die digitalen Sequenzen sind, ist; und daß die Ersetzung an der zweidimensionalen Konstellation der Punkte ausgeführt wird.

3. Verfahren zum Senden und Empfangen von Digitalsignalen nach Anspruch 2, dadurch gekennzeichnet, daß das Ersetzen die folgenden Schritte umfaßt:
- Vergrößern der Anzahl von Konstellationspunkten (M) durch Addition einer Anzahl von Redundanzkonstellationspunkten (MR), um so eine aus (M+MR) Punkten zusammengesetzte expandierte Konstellation zu erhalten;
- Berechnen einer Gewichtsfunktion (w) einer Impulsantwort h_{TX}(t) der Übertragungsfilterung (IV), die auf die expandierte Konstellation von (M+MR) Punkten erweitert ist;
- wobei die digitalen Sequenzen mit einer zugehörigen Spitzenleistung des zu übertragenen Signals, die höher als ein gegebener Wert ist, die expandierten Konstellationspunkte mit der Gewichtsfunktion (w) höher als ein gegebener Wert sind.

4. Verfahren zum Senden und Empfangen von Digitalsignalen nach Anspruch 3, dadurch gekennzeichnet, daß die Gewichtsfunktion (w) lautet: 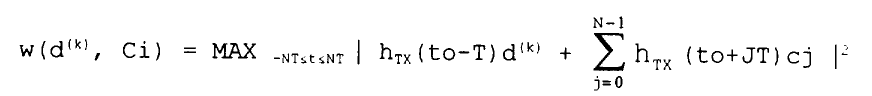 wobei T eine Symbolzeit, d^{(k)}[k=1,2 .., (M+MR)] ein "Zustand" des Systems und Ci = (ci, ci+1, ..., cN-1) ein generischer Block von N zweidimensionalen Konstellationspunkten ist.

5. System zum Senden und Empfangen von Digitalsignalen über eine Übertragungsstrecke, das umfaßt:
- für das Senden Codier- und Modulationsmittel (II) des Eingangsdigitalsignals, wobei ein Ausgangsdigitalsignal in der Form von digitalen Sequenzen erhalten wird, erste Filtermittel (IV) zum Bereitstellen eines modulierten Signals, das über einen Nichtlinearitäten und Störungen unterworfenen nichtlinearen Kanal (V, VI) übertragen werden soll;
- für das Empfangen zweite Filtermittel (VII) des von dem nichtlinearen Kanal empfangenen Signals, und Decodier- und Demodulationsmittel (IX) des gefilterten empfangenen Signals, wobei ein rekonstruiertes Digitalsignal erhalten wird,
**dadurch gekennzeichnet**, daß das System ferner umfaßt:
- für das Senden Ersetzungsmittel (III) für jene der digitalen Sequenzen, die eine zugehörige Spitzenleistung des zu übertragenden Signals höher als einen gegebenen Wert aufweisen, wobei die neuen digitalen Sequenzen eine zugehörige Spitzenleistung des zu übertragenden Signals aufweisen, die kleiner als der gegebene Wert ist;
- für das Empfangen Wiederherstellungsmittel (VIII) für die digitalen Sequenzen mit einer zugehörigen Spitzenleistung des zu übertragenden Signals, die höher als der gegebene Wert ist, wobei das Wiederherstellungsmittel vor dem Demodulationsmittel eingesetzt ist, um so die Wirkungen der Nichtlinearitäten und Störungen auf das rekonstruierte Signal zu minimieren.

6. System zum Senden und Empfangen von Digitalsignalen nach Anspruch 5, dadurch gekennzeichnet, daß die Übertragungsstrecke eine digitale Richtfunksystemstrecke ist und die Modulation eine QAM-Quadraturamplitudenmodulation mit einer zweidimensionalen Konstellation der die digitalen Sequenzen darstellenden Punkte (M) ist; und daß die Ersetzung an der zweidimensionalen Konstellation der Punkte ausgeführt wird.

7. System zum Senden und Empfangen von Digitalsignalen nach Anspruch 6, dadurch gekennzeichnet, daß das Ersetzungsmittel (III) umfaßt:
- Verzögerungsmittel (T), die das letzte zweidimensionale Element des von einem Multiplexer (MUX) ausgegebenen Blocks aus N zweidimensionalen Symbolen empfängt und es mit einer Verzögerung gleich einem Kanalsymbolintervall T ausgibt;
- Umsetzungsmittel ((M+MR)MAP), die einen BLock aus N Symbolen der Konstellation von Punkten empfangen und (M+MR) Ausgangsblöcke aus N zweidimensionalen Symbolen einer "expandierten" Konstellation ausgeben, wobei jeder Ausgangsblock die im Hinblick auf die Spitzenleistung des gefilterten Signals an dem Ausgang des ersten Filtermittels (VII) beste zu übertragende Sequenz darstellt;
- Multiplexiermittel (MUX) mit (M+MR) Eingängen und einem Ausgang, die auf der Basis der "Zustande" an dem Ausgang des Verzögerungsmittels (T) unter den an ihrem Eingang vorliegenden M+MR Blöcken den Block aus N Symbolen auswählen, der an dem Ausgang bereitgestellt werden soll.

8. System zum Senden und Empfangen von Digitalsignalen nach Anspruch 7, dadurch gekennzeichnet, daß das Umsetzungsmittel Mittel zum Berechnen jedes Ausgangsblocks umfaßt, der im Hinblick auf die Spitzenleistung gemäß der folgenden Gewichtsfunktion (w) die beste zu übertragende Sequenz repräsentiert: 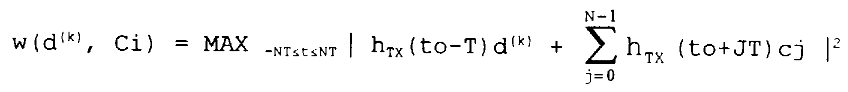 wobei T eine Symbolzeit, d^{(k)}[k=1,2 .., (M+MR)] ein "Zustand" des Systems ist, Ci = (ci, ci+1, ..., cN-1) ein generischer Block von N zweidimensionalen Konstellationspunkten ist.

## Revendications

1. Procédé d'émission et de réception de signaux numériques par l'intermédiaire d'une liaison de transmission, comprenant les étapes consistant à :
- en transmission, coder et moduler (Il) le signal numérique entré pour obtenir un signal numérique de sortie sous la forme de séquences numériques, le filtrer (IV) pour délivrer un signal modulé devant être transmis sur une voie non linéaire (V, VI) soumise à des non-linéarités et des perturbations ;
- en réception, filtrer (VII) le signal reçu à partir de la voie non linéaire, décoder et démoduler (IX) le signal reçu filtré pour obtenir un signal numérique reconstitué ;
caractérisé en ce qu'il comprend en outre les étapes consistant à :
- remplacer (III), en transmission, les séquences parmi lesdites séquences numériques ayant une puissance de crête associée du signal à transmettre supérieure à une valeur donnée par de nouvelles séquences numériques ayant une puissance de crête associée du signal à transmettre inférieure à la valeur donnée ;
- en réception, rétablir (VIII) lesdites séquences numériques ayant une puissance de crête associée du signal à transmettre supérieure à la valeur donnée avant démodulation, afin de minimiser les effets desdites non-linéarités et perturbations sur ledit signal numérique reconstitué.

2. Procédé d'émission et de réception des signaux numériques selon la revendication 1, caractérisé en ce que la liaison de transmission est une liaison de systèmes de relais hertziens numériques et la modulation est une modulation d'amplitude en quadrature (MAQ) ayant une constellation de points bidimensionnelle (M) représentant lesdites séquences numériques ; et en ce que ledit remplacement est réalisé sur ladite constellation de points bidimensionnelle.

3. Procédé d'émission et de réception de signaux numériques selon la revendication 2, caractérisé en ce que ledit remplacement comprend les étapes suivantes :
- l'agrandissement du nombre de points de constellation (M) en ajoutant un certain nombre de points de constellation en redondance (MR), pour ainsi obtenir une constellation étendue se composant de (M+MR) points ;
- le calcul d'une fonction de pondération (w) d'une réponse d'impulsion h_{TX}(t) dudit filtrage de transmission (IV) étendu à ladite constellation étendue de (M+MR) points ;
- lesdites fréquences numériques ayant une puissance de crête associée du signal à transmettre supérieure à une valeur donnée étant les points de la constellation étendue ayant la fonction de pondération (w) supérieure à une valeur donnée.

4. Procédé d'émission et de réception de signaux numériques selon la revendication 3, caractérisé en ce que ladite fonction de pondération (w) est : 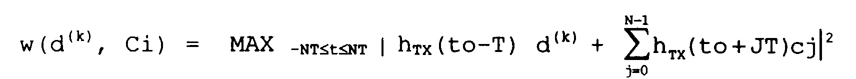 où T est un temps symbolique, d^{(k)}[k=1,2, ... (M+MR)] un "état" du système, Ci = (ci, ci+1, ..., cN-1) un bloc générique de N points de la constellation bidimensionnelle.

5. Système d'émission et de réception de signaux numériques sur une liaison de transmission, comprenant :
- en transmission, des moyens de codage et de modulation (Il) du signal numérique entré pour obtenir un signal numérique de sortie sous la forme de séquences numériques, des premiers moyens de filtrage (IV) pour délivrer un signal modulé devant être transmis sur une voie non linéaire (V, VI) soumise à des non-linéarités et des perturbations ;
- en réception, des seconds moyens de filtrage (VII) du signal reçu à partir de la voie non linéaire, et des moyens de décodage et de démodulation (IX) du signal reçu filtré pour obtenir un signal numérique reconstitué ;
caractérisé en ce qu'il comprend en outre :
- des moyens de remplacement (III), en transmission, des séquences parmi lesdites séquences numériques ayant une puissance de crête associée du signal à transmettre supérieure à une valeur donnée par de nouvelles séquences numériques ayant une puissance de crête associée du signal à transmettre inférieure à la valeur donnée ;
- en réception, des moyens de rétablissement (VIII) desdites séquences numériques ayant une puissance de crête associée du signal à transmettre supérieure à la valeur donnée, lesdits moyens de rétablissement étant insérés avant lesdits moyens de démodulation, afin de minimiser les effets desdites non-linéarités et perturbations sur ledit signal numérique reconstitué.

6. Système d'émission et de réception de signaux numériques selon la revendication 5, caractérisé en ce que la liaison de transmission est une liaison de systèmes de relais hertziens numériques et la modulation est une modulation d'amplitude en quadrature (MAQ) ayant une constellation de points (M) bidimensionnelle étant lesdites séquences numériques ; et en ce que ledit remplacement est réalisé sur ladite constellation de points bidimensionnelle.

7. Système d'émission et de réception de signaux numériques selon la revendication 6, caractérisé en ce que lesdits moyens de remplacement (III) comprennent :
- des moyens de retard (T) qui reçoivent le dernier élément bidimensionnel du bloc de N symboles bidimensionnels sortants d'un multiplexeur (MUX) et le délivrent avec un retard égal à un intervalle symbolique de voie T ;
- des moyens cartographiques ((M+MR)MAP) qui reçoivent un bloc de N symboles de ladite constellation de points et fournissent (M+MR) blocs de sortie de N symboles bidimensionnels d'une constellation "étendue", chaque bloc de sortie représentant la meilleure séquence devant être transmise en termes de puissance de crête du signal filtré à la sortie desdits premiers moyens de filtrage (VII) ;
- des moyens de multiplexage (MUX) ayant (M+MR) entrées et une sortie qui, sur la base de "l'état" à la sortie desdits moyens de retard (T) opèrent une sélection parmi les M+MR blocs présents à son entrée du bloc de N symboles devant être fourni à la sortie.

8. Système d'émission et de réception de signaux numériques selon la revendication 1, caractérisé en ce que lesdits moyens cartographiques comprennent des moyens pour calculer chaque bloc de sortie représentant la meilleure séquence devant être transmise en termes de puissance de crête, selon la fonction de pondération (w) suivante : 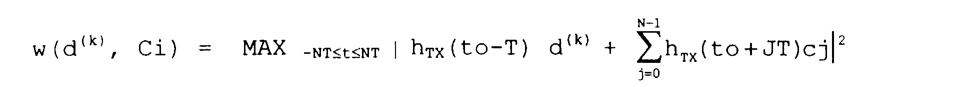 où T est un temps symbolique, d^{(k)} [k=1,2, ..., (M+MR) un "état" du système, Ci=(ci, ci+1, ..., cN-1) un bloc générique de N points de la constellation bidimensionnelle.
